Europäisches Patentamt

(19) European Patent Office (11) Publication number: **0 066 075**

Office européen des brevets **B1**

(12) **EUROPEAN PATENT SPECIFICATION**

(45) Date of publication of patent specification: **12.02.86** (51) Int. Cl.⁴: **F 16 D 65/22**

(21) Application number: **82103305.7**

(22) Date of filing: **20.04.82**

(54) **Roller retainer for brake assembly.**

(30) Priority: **01.06.81 US 269293**

(43) Date of publication of application:
**08.12.82 Bulletin 82/49**

(45) Publication of the grant of the patent:
**12.02.86 Bulletin 86/07**

(84) Designated Contracting States:
**BE CH DE FR GB IT LI SE**

(56) References cited:
**DE-A-2 260 187**
**FR-A-1 462 836**
**FR-A-1 564 873**
**FR-A-2 196 044**
**FR-A-2 252 507**
**FR-A-2 352 218**
**US-A-2 781 868**
**US-A-3 114 437**
**US-A-3 275 103**
**US-A-3 469 660**

(73) Proprietor: **Rockwell International Corporation**
**600 Grant Street**
**Pittsburgh Pennsylvania 15219 (US)**

(72) Inventor: **Majewski, Lawrence Mark**
**38759 Cottonwood Drive**
**Sterling Heights Michigan 48077 (US)**

(74) Representative: **Leiser, Gottfried, Dipl.-Ing. et al**
**Patentanwälte Prinz, Bunke & Partner**
**Ernsberger Strasse 19**
**D-8000 München 60 (DE)**

Courier Press, Leamington Spa, England.

## Description

The present invention is directed to a roller retainer for retaining a cam following roller in a pair of laterally aligned open-ended recesses provided at adjacent ends of a pair of axially spaced brake shoe webs comprising a spring formed to provide a pair of spaced substantially parallel legs, a bridge portion joining said legs and an interlocking ear at each leg, each of said legs having an end formed to encircle at least 180° of a trunnion surface of said roller, said ears being engaged with laterally aligned apertures provided to said spaced brake shoe webs. A roller retainer of this kind is disclosed in US—A—3,275,103. It is particularly useful in a brake assembly of the type disclosed in US—A—4,206,834. That brake assembly includes a pair of brake shoes having adjacent ends pivotally mounted to a support and a rotatable actuating cam disposed between the other ends of the brake shoes. A roller-type cam follower is provided between each of those other ends of the brake shoes and the actuating cam. The roller-type cam followers are seated in open-ended recesses provided to the brake shoes. Rotary movement of the actuating cam is applied to the roller-type cam followers which causes their respective brake shoes to pivot outwardly about their pivot or anchor pins to contact the inwardly facing friction surface of a brake drum.

The roller-type cam followers are comprised of a stepped cylindrical steel pin having a center portion which bears against the actuating cam and smaller diameter end portions which serve as trunnions seated in open-ended recesses provided to the spaced parallel webs of a dual web brake shoe. Under normal conditions, the roller-type cam follower is trapped between the open-ended recesses provided to the dual web brake shoe and the bearing surface of the actuating cam and held in that arrangement by the brake return spring. However, the brake assembly is comprised of a number of different parts and it is also advantageous to maintain the cam followers in the recesses provided to the brake shoes during assembly and disassembly of the brake mechanism for repair purposes. This limits the number of parts the mechanic has to be concerned with at any given time and the possibility of dropping or misplacing the cam follower rollers.

Means for retaining a roller in the open recesses provided to the ends of a brake shoe is also beneficial during extremely cold weather when the brake shoes may freeze to the surrounding drum and, if the drum clearance is not properly adjusted and the roller is not retained, the rollers may become displaced from their intended position when the cam is rotated to release the brake.

US—A—3,114,437 discloses one method of retaining a roller-type cam follower in the open-ended recesses provided to brake shoes. In that patent, the mouth of the open-ended recesses is formed to retain the ends of the rollers and a tool such as a screw driver may be required to remove the rollers from the brake shoes. The roller retainer disclosed in US—A—3,275,103 includes a spring clip with two spaced parallel legs interconnected by a bridge, and each leg has an ear for engaging an aperture in an associated brake shoe web. For mounting and removing the roller a tool may be required for engaging and disengaging the spring clip from the brake shoe webs.

The present invention aims at providing a roller retainer of the type defined at the outset which allows the cam follower rollers to be mounted and to be removed without the use of any tools.

In accordance with the invention, this is achieved by the fact that the spring is comprised of a length of spring wire, and each of that interlocking ears is comprised of an U-shaped ear formed at the junction of each leg and said bridge portion, the latter being of a length greater than the space between said legs and formed to permit resilient deformation of said bridge portion while moving at least one of said ears in the general direction of the other ear whereby said retainer may be readily deformed to engage or disengage said ears with said apertures.

Preferred embodiments of the invention are set forth in the subclaims.

The invention and the advantages offered thereby will become apparent from the following detailed description of the embodiment shown by the accompanying drawings.

In the drawings wherein like reference numerals refer to like parts:

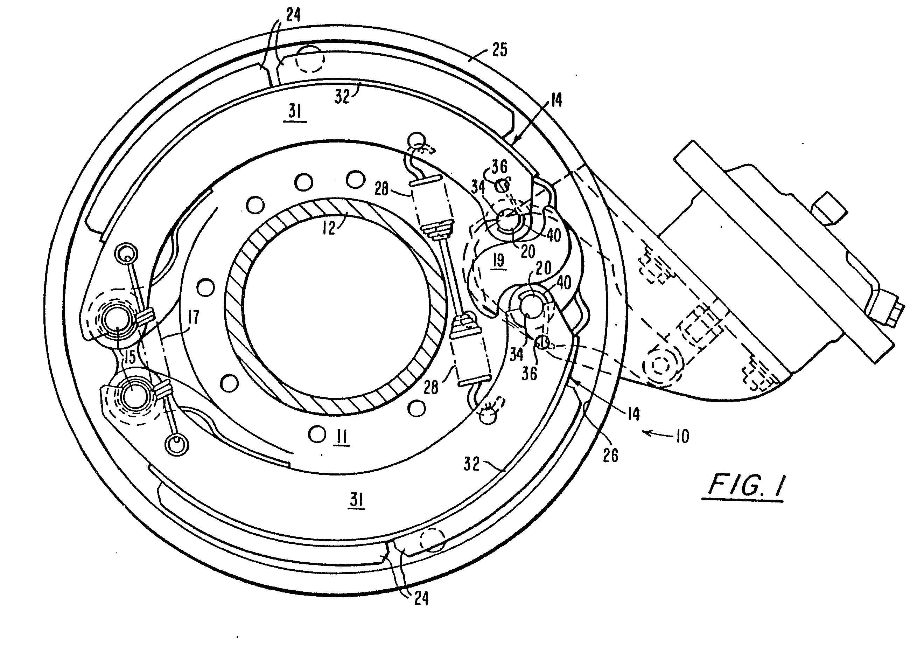

Figure 1 is a side elevation, partly in section, of a brake assembly according to the present invention;

Figure 2 is an enlarged view of a portion of Figure 1 showing the roller retainer of the present invention;

Figure 3 is a section on line 3—3 of Figure 2;

Figure 4 is a plan view of the roller retainer of the present invention;

Figure 5 is a side elevation of the roller retainer of the present invention; and

Figure 6 is an end elevation of the roller retainer of the present invention.

With reference to the drawings, there is shown a cam actuated brake assembly generally designated by the numeral 10. The brake assembly 10 is supported by a spider 11 rigid with a vehicle axle 12. A cam 19 is mounted for rotary movement between the adjacent ends of the brake shoes 14 opposite from the anchor pins 15. The brake shoes 14 are each provided with a roller-type cam follower 20. The cam is nonrotatably secured to a cam shaft mounted to the spider for rotary movement by conventional means to rock the cam 19 in a clockwise direction through an arc in the range of about 10° to 30°. The cam 19 provides an outwardly directed force to the rollers 20 and the brake shoes 14 which causes the brake shoes to pivot about the anchor pins 15. This movement forces friction lining pads 24 carried by the brake shoes 14 into contact with the inwardly facing friction surface 26 of a brake drum 25, shown by phantom lines, secured by conventional means to a wheel rotatably mounted to a spindle at the outer end of axle 12. When the brakes are released, the brake shoes 14 and the friction lining pads 24 are withdrawn from contact with the brake drum surface 26 by a return spring 28 secured at its opposite ends to the brake shoe webs.

The brake shoes 14 are dual web fabricated brake shoes. That is, each brake shoe includes a pair of axially spaced webs 31 secured to a table 32. The webs 31 are flat in a radial direction and curved in a longitudinal or circumferential direction. The brake shoe table 32 is curved in the circumferential direction and the webs 31 are welded in parallel relation along the interior curved portion of the table. This provides a generally rigid assembly of component parts to which the friction lining pads 24 may be secured by rivets or by chemical bonding.

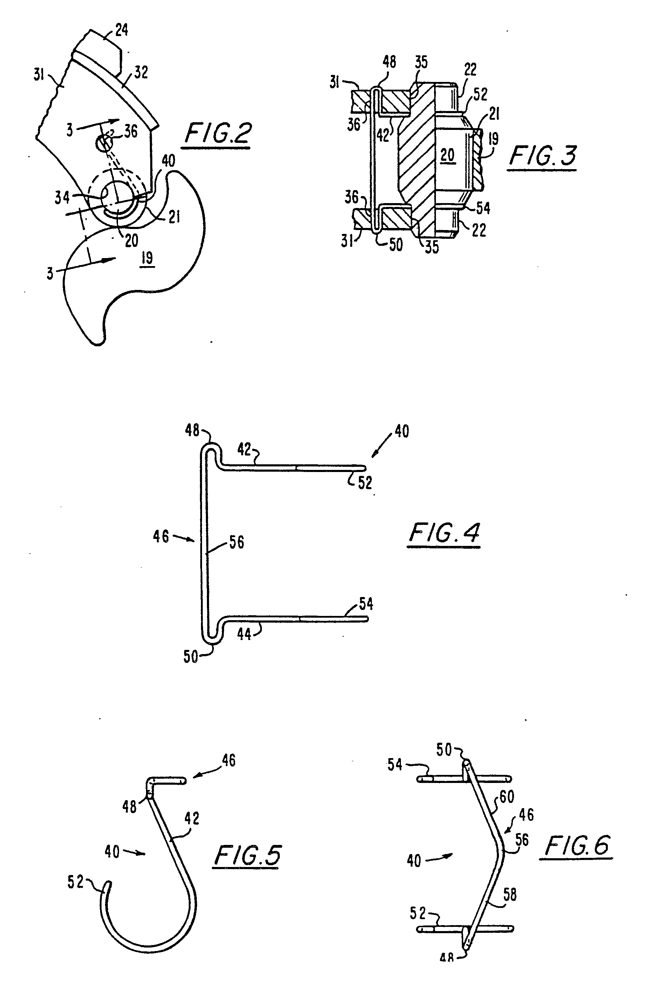

Each of the brake shoe webs 31 is provided with an open recess 34 opposite the cam follower 20 and an aperture 36 adjacent each recess 34. The recess 34 is in the form of a slot which includes an inner arcuate bearing surface or journal 35 and a mouth formed by integral brake shoe portions. The recesses are identical and laterally aligned. The bearing surfaces 35 are semicircular bearing surfaces and are adapted to engage a complementary arcuate surface of the generally cylindrical end portion 22 of the cam follower roller 20. As best shown by Figures 2 and 3, each cam roller follower 20 is comprised of a cylindrical roller surface 21 located intermediate the brake shoe webs 31 and supported by coaxial reduced diameter cylindrical shaft sections or trunnions 22 seated in the arcuate journal surfaces 35.

Each roller-type cam follower 20 is retained in its respective recess 34 by a roller retainer 40. As best shown in Figures 4—6, the roller retainer is formed from a continuous length of steel spring wire about .051 inch diameter. The stock wire is cut to a length of about seven inches and formed to provide a retainer comprised of a pair of spaced substantially parallel legs 42, 44; a bridge portion 46 joining the legs 42, 44; a U-shaped ear 48 at the junction of leg 42 with bridge portion 46; and a U-shaped ear 50 at the junction of leg 44 with bridge portion 46. The ends 52, 54 of legs 42, 44, respectively, are arcuately formed to circumferentially enclose an arc of 210° of the circumference of the trunnions 22 of the cam roller follower 20. The bridge portion 26 is longer than the distance between the legs 42 and 44 and, as best shown by Figures 2 and 5, the bridge portion 46 is formed to extend in a plane substantially normal to the parallel planes defined by the legs 42 and 44. As shown by Figure 6, the center of the bridge portion 46 is curved at 56 and joined to the ears 48 and 50 by straight segments 58 and 60 of the spring wire roller retainer 40.

The U-shaped ears 48 and 50 provide interlocking means at the junction of each leg 42, 44 and the bridge portion 46, each of which is seated or engaged in one of the apertures 36 to secure the retainer 40 and the roller trunnions 22 to the brake shoe webs 31.

When the brake assembly 10 is to be dismantled, the drum 25 is withdrawn and one of the brake shoes (preferably the lower shoe) 14 is manually rotated about its anchor pin 15 to expand the return spring 28. The bridge portion 46 of the retainer 40 provided to that brake shoe is then manually pulled to disengage the U-shaped ears 48 and 50 from the apertures 36 to free the roller-type cam follower. The cam follower roller 20 is then withdrawn from that brake shoe. The other brake shoe 14 is then manually rotated about its anchor pin. The bridge portion 46 of the roller retainer 40 associated with that brake shoe is manually withdrawn from between the webs 31 to free the cam follower which is then removed. The brake shoe return spring 28 is free of tension with the roller-type cam followers removed and the spring 28 may be manually withdrawn. One brake shoe, preferably the lower shoe, is then rotated approximately 180° to relieve the tension on and thereby permit removal of the anchor end retaining spring 17. The brake shoes can then be manually withdrawn from the anchor pins and new or relined brake shoes substituted therefor. Except for removal of the brake drum, the brake assembly can be dismantled manually without the use of any tools and without requiring the mechanic to manually move the retainer between the cam 19 and the roller followers 20 while the return spring is under tension which may cause injury to the mechanic's fingers if they are caught between the cam and rollers.

The roller retainer 40, as previously described and claimed hereinafter, are disposed so the bridge portion 46 may be readily grasped between the brake shoe webs to disengage the ears 48 and 50 from the apertures 36. The spring wire roller retainer is also less complex than some other roller retainers and is therefore less expensive to manufacture since it does not require as many forming operations.

## Claims

1. A roller retainer (40) for retaining a cam following roller (20) in a pair of laterally aligned open-ended recesses (34) provided at adjacent ends of a pair of axially spaced brake shoe webs (31) comprising a spring formed to provide a pair of spaced substantially parallel legs (42, 44), a bridge portion (46) joining said legs and an interlocking ear (48, 50) at each leg, each of said legs (42, 44) having an end (52, 54) formed to encircle at least 180° of a trunnion surface (22) of said roller (20), said ears (48, 50) being engaged with laterally aligned apertures (36) provided to said spaced brake shoe webs (31), characterized in that the said spring is comprised of a length of spring wire, and each of that interlocking ears (48, 50) is comprised of an U-shaped ear (48, 50) formed at the junction of each leg (42, 44) and said bridge portion (46), and the latter being of a length greater than the space between said legs (42, 44) and formed to permit resilient deformation of said bridge portion (46) while moving at least one of said ears (48, 50) in the general direction of the other ear whereby said retainer (40) may be readily deformed to engage or disengage said ears (48, 50) with said apertures (36).

2. The roller retainer defined by claim 1, characterized in that one end (52, 54) of each of said legs (42, 44) is formed to provide a circular arc enclosing said tunnion surface (22) of said roller (20).

3. The roller retainer defined by claim 2, characterized in that each of said circular arcs encloses about 210° of said trunnion surfaces (22).

4. The roller retainer defined by claim 2 or 3, characterized in that said arcuately formed ends (52, 54) of said legs (42, 44) define a pair of spaced parallel planes and said bridge portion (46) is formed in a plane substantially normal to said pair of parallel planes.

5. The roller retainer defined by claim 1, characterized in that the center (56) of said bridge portion (46) is curved and joined to said U-shaped ears (48, 50) by straight segments (58, 60) of said wire.

## Revendications

1. Dispositif de maintien (40) de galet pour maintenir un galet (20) de contre-came dans une paire d'évidements à extrémité ouverte (34) alignés latéralement, prévus aux extrémités adjacentes d'une paire de flasques axialement espacés (31) appartenant à un sabot de frein, comprenant un ressort formé de façon à présenter une paire de branches espacées sensiblement parallèles (42, 44) une partie en pont (46) reliant lesdites branches et une oreille d'interverrouillage (48, 50) à chaque branche, chacune des branches (42, 44) ayant une extrémité (52, 54) conformée pour entourer au moins 180° d'une surface (22) de tourillon du galet (20) tandis que les oreilles (48, 50) sont en prise avec des ouvertures latéralement alignées (36) dont sont munis les flasques espacés (31) du sabot de frein, caractérisé en ce que le ressort est constitué d'un fil d'acier à ressort, et chacune de ces oreilles d'interverouillage (48, 50) est consituée d'une oreille en U (48, 50) formée à la jonction de chaque branche (42, 44) et de la partie en pont (46), cette dernière ayant une longueur supérieure à celle de l'intervalle entre les branches (42, 44) et étant conformée de façon à permettre à la partie en pont de se déformer élastiquement tandis que l'une au moins des oreilles (48, 50) se déplace dans la direction générale de l'autre oreille afin que ledit dispositif de maintien (40) puisse être facilement déformé pour engager les oreilles (48, 50) dans les ouvertures (36) ou les en dégager.

2. Dispositif de maintien de galet conforme à la revendication 1, caractérisé en ce qu'une extrémité (52, 54) de chacune des branches (42, 44) est formée pour constituer un arc circulaire entourant la surface (22) de tourillon du galet (20).

3. Dispositif de maintien de galet conforme à la revendication 2, caractérisé en ce que chacun des arcs circulaires entoure les surfaces (22) de tourillon sur environ 210°.

4. Dispositif de maintien de galet conforme à la revendication 2 ou à la revendication 3, caractérisé en ce que lesdites extrémités (52, 54) formées en arc des branches (42, 44) déterminent une paire de plans parallèles espacés et en ce que la partie en pont (46) est dans un plan sensiblement perpendiculaire à ladite paire de plans parallèles.

5. Dispositif de maintien conforme à la revendication 1, caractérisé en ce que le centre (56) de la partie en pont (46) est courbé et relié aux oreilles en U (48, 50) au moyen de segments rectilignes du fil.

## Patentansprüche

1. Rollenhalter (40) zum Festhalten einer Nockengleitrolle (20) in zwei seitlich in einer Linie verlaufenden, am Ende offenen Ausnehmungen (34), die an benachbarten Enden von zwei axial im Abstand verlaufenden Bremsschuhstegen (31) angebracht sind, mit einer Feder, die so geformt ist, daß zwei im Abstand voneinander im wesentlichen parallel verlaufende Schenkel (42, 44), ein die Schenkel verbindender Brückenabschnitt (46) und eine Einhaköse (48, 50) an jedem Schenkel entstehen, wobei jeder Schenkel (42, 44) ein Ende (52, 54) aufweist, das so geformt ist, daß es wenigstens 180° einer Zapfenfläche (22) der Nockengleitrolle (20) umfaßt, und wobei die Einhakösen (48, 50) mit seitlich in einer Linie liegenden Öffnungen (36) in Eingriff stehen, die in den im Abstand befindlichen Bremsschuhstegen (31) angebracht sind, dadurch gekennzeichnet, daß die Feder aus einem Stück Federdraht besteht und daß jede der Einhakösen (48, 50) aus einer U-förmigen Öse (48, 50) an der Verbindungsstelle jedes Schenkels (42, 44) mit dem Brückenabschnitt (46) besteht, wobei letzterer eine Länge hat, die größer als der Abstand zwischen den Schenkeln (42, 44) ist, und so geformt ist, daß eine elastische Verformung des Brückenabschnitts (46) ermöglicht wird, während wenigstens eine der Ösen (48, 50) in der allgemeinen Richtung der anderen Öse bewegt wird, wodurch der Halter (40) zum Herbeiführen oder Aufheben des Eingriffs der Ösen (48) in den Öffnungen (36) ohne weiteres verformt werden kann.

2. Rollenhalter nach Anspruch 1, dadurch gekennzeichnet, daß das eine Ende (52, 54) jedes der Schenkel (42, 44) so geformt ist, daß ein kreisförmiger Bogen entsteht, der die Zapfenfläche (22) der rolle (20) umschließt.

3. Rollenhalter nach Anspruch 2, dadurch gekennzeichnet, daß jeder der kreisförmigen Bogen etwa 210° der Zapfenflächen (22) umschließt.

4. Rollenhalter nach Anspruch 2 oder 3, dadurch gekennzeichnet, daß die gekrümmten Enden (52, 54) der Schenkel (42, 44) zwei im Abstand voneinander parallel verlaufende Ebenen festlegen und daß der Brückenabschnitt (46) in einer Ebene gebildet ist, die im wesentlichen senkrecht zu den zwei parallelen Ebenen verläuft.

5. Rollenhalter nach Anspruch 1, dadurch gekennzeichnet, daß die Mitte (56) des Brückenabschnitts (46) gekrümmt ist und durch gerade Segmente (58, 60) des Drahts mit den U-förmigen Ösen (48, 50) verbunden ist.

0 066 075

FIG. 1

1

_FIG.2_

_FIG.3_

_FIG.4_

_FIG.5_

_FIG.6_